# FASCICULE DE BREVET EUROPEEN

(11) **EP 1 848 962 B1**
(45) Date de publication et mention de la délivrance du brevet: **26.05.2010**
(21) Numéro de dépôt: 06708219.8
(22) Date de dépôt: 13.02.2006
(51) Int. Cl.: G01C 11/02

(54) **DISPOSITIF D'ACQUISITION D'UNE IMAGE NUMERIQUE PAR BALAYAGE AVEC STABILISATION PASSIVE**
EINRICHTUNG ZUR BESCHAFFUNG EINES DIGITALEN BILDES DURCH PASSIV-STABILISATIONS-SCANNEN
DEVICE FOR ACQUIRING A DIGITAL IMAGE BY PASSIVE STABILIZATION SCANNING

(30) Priorité: 15.02.2005 FR 0501520
(43) Date de publication de la demande: 31.10.2007
(73) Titulaire: THALES, 92200 Neuilly sur Seine (FR)
(72) Inventeur: ANTOINE, Jacques, F-78180 Montigny Le Bretonneux (FR); CHARASSE, Rémi, F-94230 Cachan (FR)
(74) Mandataire: Henriot, Marie-Pierre
(86) Numéro de dépôt international: PCT/EP2006/050878
(87) Numéro de publication internationale: WO 2006/087307

(56) Documents cités:
- FR-A- 2 595 817
- US-A- 5 798 786
- US-B1- 6 473 119

## Description

L'invention concerne l'acquisition d'une image numérique de grande dimension, par balayage, par exemple à bord d'un aéronef, d'un navire ou plus généralement d'un porteur mobile.

Cette acquisition d'image est classiquement obtenue en utilisant un dispositif équipé d'un film argentique de grandes dimensions typiquement de 60 mm X 60 mm ou 114 mm x 114 mm et jusqu'à 230 mm X 230 mm et de moyens permettant de prendre une photo avec des temps d'exposition compris entre 1 /100 à 1 /1000 s.

Ce type de dispositif peut être remplacé par un dispositif électronique, moins coûteux en terme d'infrastructure opérationnelle et plus facile à utiliser. Un tel dispositif électronique installé par exemple à bord d'un aéronef comprend de manière classique une barrette de photodiodes par exemple de 114 mm de longueur disposée perpendiculairement au sens de déplacement de l'aéronef. L'image est obtenue par balayage, c'est-à-dire lors du déplacement de l'aéronef : l'image est dite acquise en mode « push-broom ». Pour obtenir une image de 114 mm x 114 mm, il faut environ 10 s de balayage.

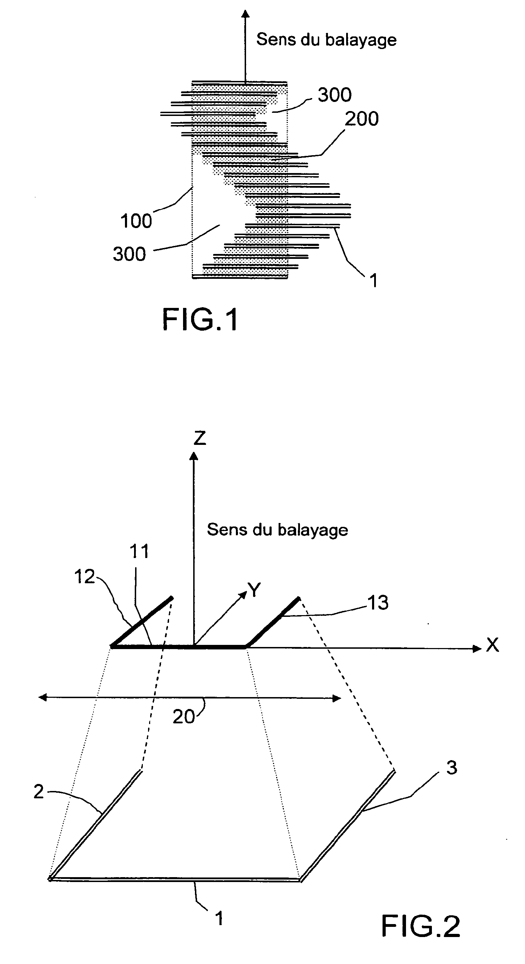

Mais l'aéronef est soumis à divers mouvements pendant ces 10 s et notamment à des mouvements de rotation perpendiculaires au sens du balayage (roulis), ce qui provoque une déformation latérale de l'image la rendant parfois illisible. Cette déformation latérale est schématiquement illustrée figure 1. On a représenté sur cette figure la projection de la barrette 1 qui au fur et à mesure du balayage subit des déplacements perpendiculaires au sens du balayage, le champ initialement visé 100 qui a la forme d'un bandeau et l'image enregistrée 200 (en grisé) : sur cette image 200, manquent les zones 300.

Une méthode communément utilisée pour remédier à ce problème est de stabiliser le dispositif pendant la prise de vue au moyen d'une gyrostabilisation opto-mécanique de la ligne de visée ; une autre méthode, appliquée après la prise de vue, est de recaler les lignes entre elles au moyen d'un algorithme, de manière à obtenir une image exploitable, ce qui a pour conséquence une réduction du champ de vue.

Un exemple d'un tel dispostif est décrit dans le document FR 2 595 817. Un autre exemple est décrit dans le document US 6 473 119.

L'invention propose un dispositif comportant trois détecteurs linéaires disposés en U.

Lorsque le dispositif est soumis à des mouvements perpendiculaires au sens du balayage, les détecteurs latéraux prennent le relais en avance sur le détecteur central, ce qui permet ainsi de former l'image de la totalité du champ initialement visé.

Plus précisément l'invention a pour objet un dispositif d'acquisition d'une image numérique par balayage au moyen d'un détecteur linéaire photosensible, le dispositif étant susceptible d'être soumis à des mouvements perpendiculaires au balayage, principalement **caractérisé en ce qu'**il comporte en outre deux autres détecteurs linéaires photosensibles, les trois détecteurs linéaires photosensibles étant disposés de manière à ce que la détection soit obtenue selon sensiblement un U.

Selon une caractéristique de l'invention, il comprend des moyens pour déterminer la vitesse et la position angulaires du dispositif et des moyens pour dater cette vitesse et cette position angulaires ainsi que les signaux issus des détecteurs linéaires ; il comprend également une mémoire d'image numérique comprenant des pixels provenant d'un détecteur déterminé par ces moyens.

Ce dispositif permet ainsi de compenser électroniquement les mouvements perpendiculaires au balayage, sans gyrostabilisation optomécanique ni pertes d'informations image dans le champ initialement visé.

De préférence, il comprend au moins un miroir plan associé à un détecteur et orienté de manière à permettre la projection optique du détecteur dans l'alignement perpendiculaire de l'extrémité du détecteur adjacent. Le miroir est orienté par exemple à environ 45° par rapport au plan du détecteur.

Il comprend avantageusement des lames semi-réfléchissantes respectivement situées à l'extrémité du (ou des) miroir(s) de manière à ce que l'extrémité d'un détecteur vise le même point objet que l'extrémité du détecteur adjacent de manière à éviter une discontinuité dans l'image acquise.

L'invention a aussi pour objet un système d'acquisition d'une image en mode push-broom, ou en mode de type « veille panoramique », **caractérisé en ce qu**'il comprend un dispositif tel que décrit.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite représente schématiquement un exemple de déformation latérale de l'image,
la figure 2 représente une vue en perspective d'un exemple de dispositif selon l'invention,
les figures 3a et 3b illustrent schématiquement la projection des barrettes push-broom 1 et latérales 2 et 3 respectivement à un instant t et en déplacement sans mouvement autre que celui du déplacement,
les figures 4a et 4b illustrent schématiquement le remplissage de la mémoire d'image du dispositif par les trois barrettes, au terme d'un balayage d'une certaine durée pendant laquelle le dispositif a subi des mouvements perpendiculaires au balayage,
la figure 5 illustre schématiquement le remplissage de la mémoire d'image du dispositif à différents instants de balayage,
la figure 6 représente schématiquement un exemple d'organigramme de remplissage de la mémoire d'image du dispositif,
les figures 7 représentent schématiquement un exemple de disposition des barrettes de photodiodes selon l'invention ; la figure 7a est une projection des barrettes dans un plan XY indiqué figure2, les figures 7b et 7c sont des projections des barrettes dans un plan XZ avec Y=0 pour la figure 7b et Y>0 pour la figure 7c.

D'une figure à l'autre, les éléments identiques ont les mêmes références.

Le dispositif selon l'invention comporte trois détecteurs linéaires disposés sensiblement en U. Ces détecteurs sont par exemple des barrettes de photodiodes. On a représenté figure 2 une vue en perspective de ce dispositif qui comprend une barrette centrale 11 dite push-broom, deux barrettes latérales 12, 13 et la projection 1, 2 et 3 de ces détecteurs sur le sol à travers une optique classique 20.

On va décrire plus particulièrement l'invention dans le cas d'une acquisition d'image par balayage à bord d'un aéronef.

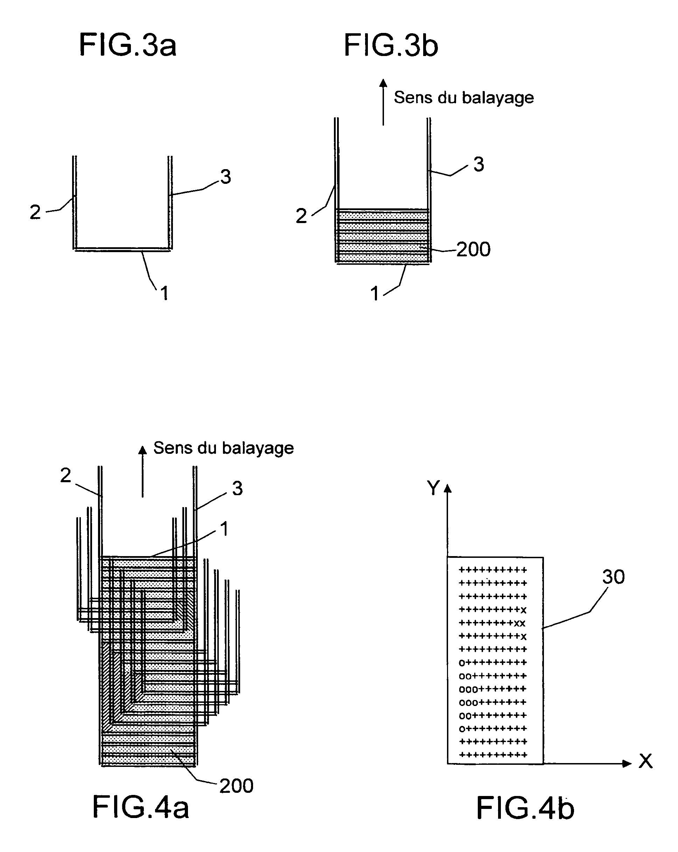

L'image est réalisée de manière habituelle en mode push-broom : une dimension de l'image est obtenue par la projection de la barrette push-broom, la seconde dimension de l'image est obtenue par le déplacement du dispositif solidaire de l'aéronef. Les figures 3a et 3b illustrent schématiquement la projection des barrettes push-broom 1 et latérales 2 et 3 respectivement à un instant t et en déplacement lorsque le dispositif n'est pas soumis à des mouvements autres que celui du déplacement. L'image (représentée en grisé) est celle obtenue par la barrette push-broom : elle correspond intégralement au champ visé.

Sur un mouvement perpendiculaire au balayage de la barrette push-broom, comme par exemple un mouvement de roulis, les barrettes latérales font l'acquisition, dans un mode de type panoramique de ce que la barrette push-broom ne peut plus imager du fait de son décalage par rapport à l'axe de visée initial. Les barrettes latérales permettent de combler les zones manquantes 300 qui apparaissent sur la figure 1 et ainsi d'obtenir une image qui correspond intégralement au champ visé.

On rappelle que le signal photonique capté par les photodiodes est converti en un signal électrique qui alimente une mémoire d'image comportant des pixels. Les figures 4a et 4b illustrent le remplissage de la mémoire d'image du dispositif par les trois barrettes. La figure 4a représente schématiquement la projection des barrettes push-broom 1 et latérales 2 et 3 en déplacement lorsque le dispositif est soumis à des mouvements perpendiculaires à celui du déplacement. La mémoire 30 représentée figure 4b est remplie au fur et à mesure de l'arrivée des lignes de pixels. Les zones balayées en panoramique par les projections des barrettes latérales gauche 2 et droite 3 sont respectivement représentées par des « o » / des « x » ; les zones balayées en push-broom par la projection de la barrette push-broom 1 est représentée par des « + ». L'image obtenue est celle de la totalité du champ initialement visé. Le pixel central de l'image résultante représente toujours le centre du champ initialement visé en repère absolu.

Lorsqu'il n'y a aucun mouvement perpendiculaire au déplacement, seule la barrette en mode push-broom est utile pour construire une image : les pixels d'une ligne proviennent tous de la barrette push-broom c'est-à-dire qu'ils sont tous obtenus au même instant.

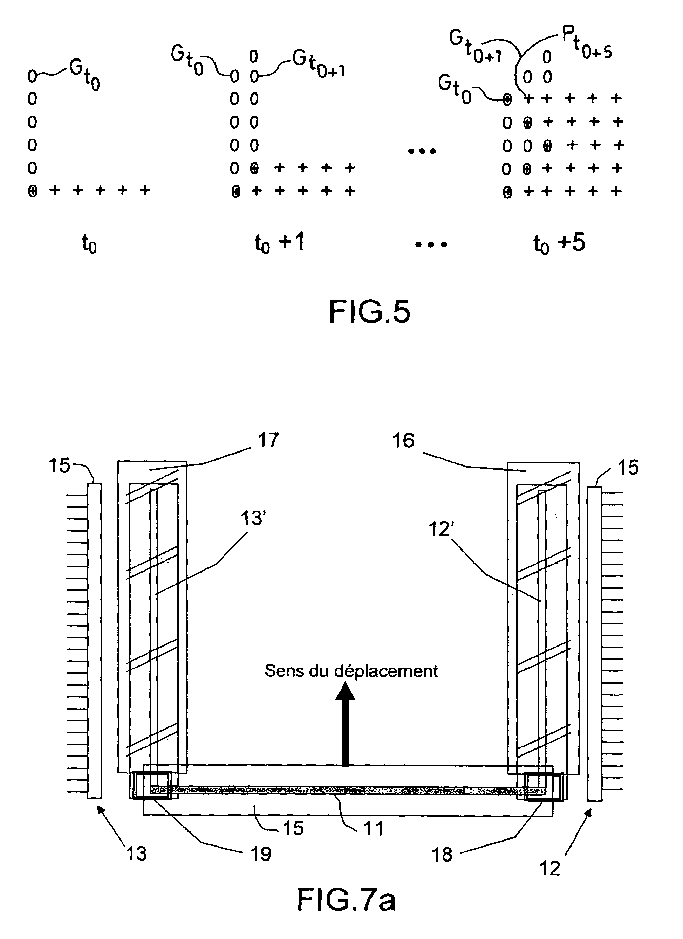

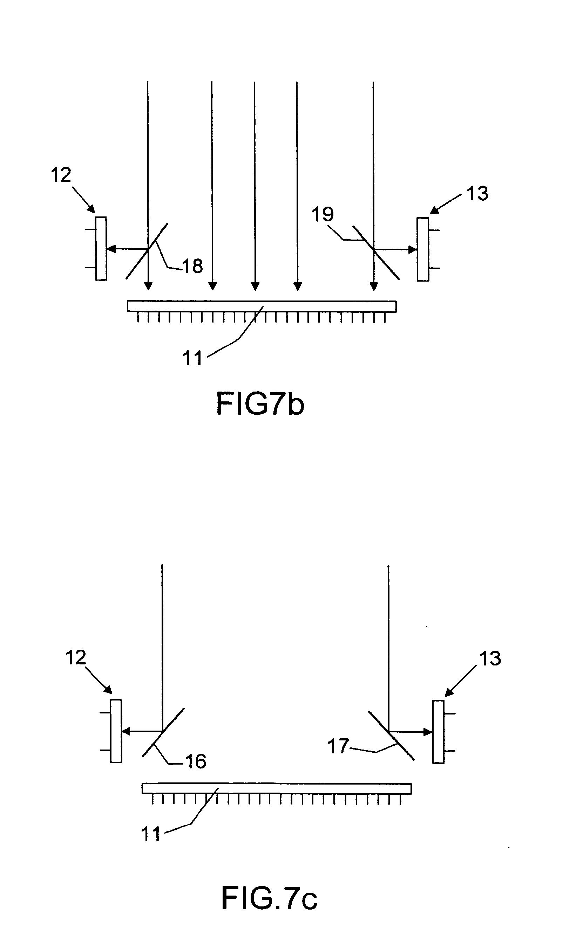

Lorsque les barrettes latérales sont mises à contribution, les pixels d'une ligne ne sont pas tous obtenus au même instant. Ceci est illustré sur la figure 5 : il s'agit d'un exemple de remplissage de la mémoire 30 aux instants t0, t0+1, ..., t0+5, auxquels ont été successivement formés les pixels provenant de la barrette push-broom. A t0, la barrette push-broom subit un premier décalage vers la droite : la barrette latérale gauche est donc mise à contribution. A t0+1, la barrette push-broom subit un deuxième décalage dans le même sens. A t0+5, la barrette push-broom a finalement subi trois décalages vers la droite et est revenu vers sa position de référence à raison de deux décalages vers la gauche. Le pixel Pₜₒ₊₅ correspond à un point image formé à l'instant t0 + 5 par la barrette push-broom, alors que le pixel Gₜ₀ qui provient de la barrette latérale gauche correspond à un point image formé à l'instant t0. Les pixels de cette ligne n'ont donc pas tous été obtenus au même instant. Le problème est identique pour les pixels provenant de la barrette latérale droite. En outre, le pixel Gₜ₀₊₁ correspond à un point image formé à l'instant t0+1 par la barrette latérale gauche. Il est de préférence remplacé comme illustré sur la figure par le pixel Pₜ₀₊₅ qui correspond à un point image formé à l'instant t0+5 par la barrette push-broom, car l'information Pₜ₀₊₅ est plus récente que Gₜ₁. Selon une alternative, on peut décider de privilégier l'information Gₜ₁ acquise en premier par rapport à l'information ultérieure Pₜ₀₊₅ : dans ce cas, le pixel Pₜ₀₊₅ est ignoré au profit du pixel Gₜ₀₊₁. Certains pixels sont représentés par « o » et « + » conformément à un mode de réalisation particulier avec lames semi-transparentes, décrit en relation avec la figure 7b.

Pour permettre la reconstruction de l'image, il est donc nécessaire de déterminer de quelle barrette provient un pixel et de le dater. La barrette est par exemple déterminée en fonction de sa position (ou plus généralement de celle du dispositif) par rapport à une position de référence. Cette position de référence est celle du dispositif lorsqu'il n'est pas soumis à des mouvements perpendiculaires au balayage. Lorsque la position est décalée par exemple en raison du roulis, ce décalage est alors déterminé en fonction des informations provenant d'un gyromètre. Cette information de position comprend également l'instant à laquelle elle est fournie de manière à pouvoir l'associer au pixel correspondant.

La reconstruction de l'image impose donc que les signaux issus de chaque barrette ainsi que ceux issus du gyromètre soient datés. Un algorithme situe chaque pixel dans la mémoire tampon en fonction de ces informations.

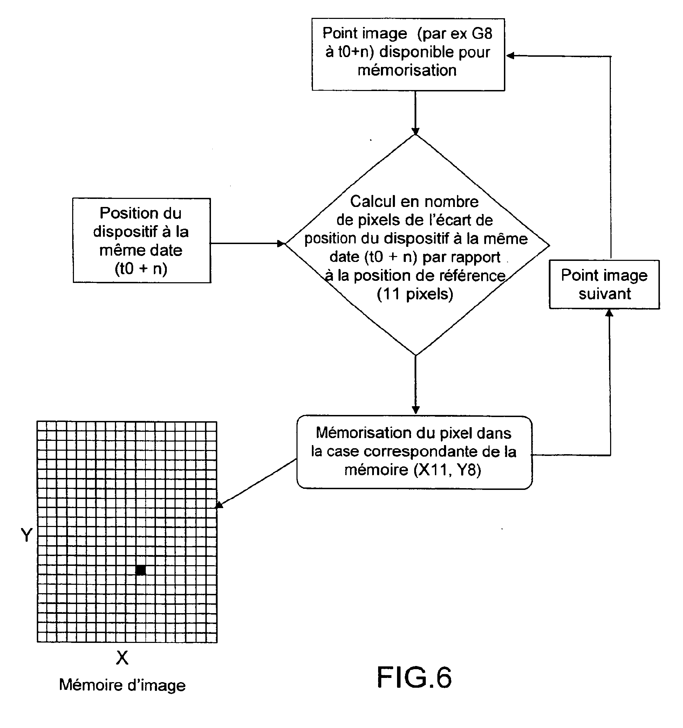

Un exemple d'organigramme est présenté figure 6. Un point image provenant de la 8è photodiode de la barrette gauche (G8) et enregistré à l'instant t0+n est destiné à être mis en mémoire en tant que pixel. Ce pixel a les coordonnées (X, Y) dans la mémoire. Dans notre exemple Y=8. X est déterminé en calculant l'écart de position du dispositif par rapport à la position de référence, à l'instant t0+n : on obtient par exemple X=11. Le pixel est alors mis en mémoire en (X,Y). La même procédure est alors reproduite pour le point image suivant.

On va à présent décrire plus en détail la disposition des barrettes, en relation avec les figures 7. Ces figures sont des projections dans des plans du repère XYZ indiqué figure 2. La figure 7a est une projection des barrettes dans un plan XY ; les figures 7b et 7c sont des projections des barrettes dans un plan XZ avec Y=0 pour la figure 7b et Y>0 pour la figure 7c. Sur les figures 7b et 7c, les rayons provenant des points objet sont représentés. Une barrette de photodiodes 11 représentée figure 7a est en fait insérée dans un support 15. Ce support est plus large et plus long que les photodiodes elles-mêmes. Ainsi lorsque les supports sont disposés en U dans un même plan, les barrettes de photodiodes ne sont pas jointives, même lorsque les supports sont jointifs.

C'est pourquoi dans un premier temps, les barrettes latérales 12 et 13 par exemple de même longueur sont tournées de 90°, les photodiodes de l'une faisant face aux photodiodes de l'autre et décalées de la barrette push-broom comme indiqué figures 7. Puis des miroirs ajustables 16, 17 sont disposés parallèlement aux barrettes latérales et orientés de manière à permettre la projection optique de chaque barrette latérale dans l'alignement perpendiculaire des extrémités de la barrette push-broom adjacente. Ils sont orientés à environ 45°. Dans ce cas, les barrettes 11, 12 et 13 ne sont pas disposées en U dans un même plan mais elles sont disposées de manière à ce que la détection soit obtenue selon un U.

Jusqu'à présent on a considéré que les barrettes sont disposées en U ou plus généralement que la détection est obtenue selon un U, les branches latérales du U étant perpendiculaires à celle de sa base. Dans la pratique une certaine tolérance sur cette perpendicularité est admise.

De préférence, des lames semi-réfléchissantes 18, 19 sont respectivement disposées à l'extrémité des miroirs 16, 17 de manière à ce que l'extrémité d'une barrette vise le même point objet que l'extrémité de la barrette adjacente de manière à éviter une discontinuité dans l'image acquise. Les lames semi-transparentes permettent une jonction parfaite du système de prise de vue dans le champ optique. Dans ce mode de réalisation, les pixels correspondants sont représentés figure 5 à la fois par « o » et « + ».

On peut selon un premier mode de réalisation projeter l'image des barrettes latérales aux extrémités de la barrette push-broom et ainsi utiliser deux miroirs (un par barrette latérale) : c'est l'exemple représenté figures 7. Selon un autre mode de réalisation, on projette l'image de la barrette push-broom aux extrémités des barrettes latérales et on utilise ainsi un seul miroir. Ce miroir est alors équipé de lames semi-réfléchissantes à ses deux extrémités.

Un dispositif selon l'invention a été réalisé avec trois barrettes identiques présentant chacune les caractéristiques suivantes :
12000 photodiodes,
taille d'une photodiode = 6.5 µm X 6.5 µm,
78 mm de longueur,
76 paires de lignes/mm,
IFOV (Instantaneous Field Of View, soit le champ instantané) = 21 prad pour la focale demandée de 300mm,
champ total visé = 260 mrad (14,8°) pour la focale de 300mm,
période ligne min 600 µs,
dynamique c'est-à-dire l'amplitude de sortie de la barrette par rapport au bruit: 1000/1.

Ce détecteur permet de se rapprocher au mieux des caractéristiques du film argentique.

On a décrit l'invention dans le cas d'une acquisition d'image par balayage à bord d'un aéronef.

Le dispositif peut également être installé à bord d'un navire équipé d'un système de veille panoramique c'est-à-dire d'un système d'acquisition d'image par rotation autour d'un axe vertical d'une barrette verticale. Ce système est également soumis à des mouvements perpendiculaires au balayage, au gré du roulis ou du tangage du navire.

De la même façon, il peut être installé à bord d'un véhicule terrestre équipé d'un système de veille panoramique, soumis à des mouvements perpendiculaires au balayage, dus par exemple aux cahots de la route.

## Revendications

1. Dispositif d'acquisition d'une image numérique par balayage au moyen d'un détecteur linéaire photosensible (11), le dispositif étant susceptible d'être soumis à des mouvements perpendiculaires au sens du balayage, **caractérisé en ce qu'**il comporte en outre deux autres détecteurs linéaires photosensibles (12, 13), les trois détecteurs linéaires photosensibles étant disposés de manière à ce que la détection soit obtenue selon sensiblement un U, des moyens pour déterminer la vitesse et la position angulaires du dispositif et des moyens pour dater cette vitesse et cette position angulaires ainsi que les signaux issus des détecteurs linéaires.

2. Dispositif selon la revendication précédente, **caractérisé en ce qu'**il comprend une mémoire d'image numérique (30) comprenant des pixels provenant d'un détecteur déterminé par lesdits moyens.

3. Dispositif selon l'une quelconque des revendications précédentes, **caractérisé en ce qu'**il comprend au moins un miroir plan (16, 17) associé à un détecteur (12, 13) et orienté de manière à permettre la projection optique du détecteur (12, 13) dans l'alignement perpendiculaire de l'extrémité du détecteur adjacent (11).

4. Dispositif selon la revendication précédente, **caractérisé en ce que** le miroir (16, 17) est orienté à environ 45° par rapport au plan du détecteur (12, 13) auquel il est associé.

5. Dispositif selon l'une quelconque des revendications 3 ou 4, **caractérisé en ce qu'**un détecteur visant des points objets, il comprend des lames semi-réfléchissantes (18, 19) respectivement situées à l'extrémité du (ou des) miroir(s) (16, 17) de manière à ce que l'extrémité d'un détecteur vise le même point objet que l'extrémité du détecteur adjacent pour éviter une discontinuité dans l'image acquise.

6. Dispositif selon l'une quelconque des revendications précédentes, **caractérisé en ce que** les détecteurs latéraux (12, 13) sont de même longueur.

7. Système d'acquisition d'une image en mode push-broom, **caractérisé en ce qu'**il comprend un dispositif selon l'une des revendications 1 à 6.

8. Système d'acquisition d'une image en mode de type « veille panoramique », **caractérisé en ce qu'**il comprend un dispositif selon l'une des revendications 1 à 6.

## Claims

1. Device for acquiring a digital image by scanning using a photo-sensitive linear detector (11), the device being susceptible to undergoing movements perpendicular to the scanning direction, **characterised in that** it further comprises two other linear photo-sensitive detectors (12, 13), the three linear photo-sensitive detectors being disposed so that an essentially U-shaped detection is obtained, means for determining the speed and the angular position of the device and means for determining the timing of this speed and this angular position, as well as the signals originating from the linear detectors.

2. Device according to the previous claim, **characterised in that** it comprises digital image memory (30) comprising pixels originating from a detector determined by said means.

3. Device according to any one of the previous claims, **characterised in that** it comprises at least one flat mirror (16, 17) associated with a detector (12, 13) and oriented so that it allows the optical projection of the detector (12, 13) in the perpendicular alignment of the end of the adjacent detector (11).

4. Device according to the previous claim, **characterised in that** the mirror (16, 17) is oriented at approximately 45° in relation to the plane of the detector (12, 13) to which it is associated.

5. Device according to claim 3 or 4, **characterised in that** a detector targeting the object points comprises semi-reflective plates (18, 19) respectively situated at the end of the mirror (s) (16, 17) so that the end of a detector targets the same object point as the end of the adjacent detector in order to prevent discontinuity in the acquired image.

6. Device according to any one of the previous claims, **characterised in that** the lateral detectors (12, 13) are the same length.

7. System for acquiring an image in push-broom mode, **characterised in that** it comprises a device according to one of claims 1 to 6.

8. System for acquiring an image in a "panoramic view" type mode, **characterised in that** it comprises a device according to one of claims 1 to 6.

## Patentansprüche

1. Vorrichtung zum Erfassen eines digitalen Bildes durch Abtasten mit einem fotoempfindlichen linearen Detektor (11), wobei die Vorrichtung Bewegungen lotrecht zur Abtastrichtung erfahren kann, **dadurch gekennzeichnet, dass** sie ferner Folgendes umfasst: zwei weitere lineare fotoempfindliche Detektoren (12, 13), wobei die drei linearen fotoempfindlichen Detektoren so angeordnet sind, dass eine im Wesentlichen U-förmige Erfassung erzielt wird, Mittel zum Ermitteln der Geschwindigkeit und der Winkelposition der Vorrichtung und Mittel zum Timing dieser Geschwindigkeit und dieser Winkelposition sowie der von dem linearen Detektoren ausgehenden Signale.

2. Vorrichtung nach dem vorherigen Anspruch, **dadurch gekennzeichnet, dass** sie einen digitalen Bildspeicher (30) umfasst, der Pixel enthält, die von einem mit dem Mittel ermittelten Detektor stammen.

3. Vorrichtung nach einem der vorherigen Ansprüche, **dadurch gekennzeichnet, dass** sie wenigstens einen mit einem Detektor (12, 13) assoziierten Planspiegel (16, 17) umfasst, der so ausgerichtet ist, dass die optische Projektion des Detektors (12, 13) in lotrechter Ausrichtung auf das Ende des Nachbardetektors (11) ermöglicht wird.

4. Vorrichtung nach einem der vorherigen Ansprüche, **dadurch gekennzeichnet, dass** der Spiegel (16, 17) in einem Winkel von etwa 45° in Bezug auf die Ebene des Detektors (12, 13) ausgerichtet ist, mit dem er assoziiert ist.

5. Vorrichtung nach Anspruch 3 oder 4, **dadurch gekennzeichnet, dass** ein Objektpunkte anpeilender Detektor teilreflektierende Platten (18, 19) umfasst, die sich jeweils am Ende des/der Spiegel(s) (16, 17) befinden, so dass das Ende eines Detektors denselben Objektpunkt anpeilt wie das Ende des Nachbardetektors, um eine Diskontinuität in dem erfassten Bild zu verhüten.

6. Vorrichtung nach einem der vorherigen Ansprüche, **dadurch gekennzeichnet, dass** die lateralen Detektoren (12, 13) dieselbe Länge haben.

7. System zum Erfassen eines Bildes im Push-Broom-Modus, **dadurch gekennzeichnet, dass** es eine Vorrichtung nach einem der Ansprüche 1 bis 6 umfasst.

8. System zum Erfassen eines Bildes im "Panaroma"-Modus, **dadurch gekennzeichnet, dass** es eine Vorrichtung nach einem der Ansprüche 1 bis 6 umfasst.
